# EUROPÄISCHE PATENTANMELDUNG

(11) **EP 4 269 099 A1**
(43) Veröffentlichungstag der Anmeldung: **01.11.2023**
(21) Anmeldenummer: 23166611.6
(22) Anmeldetag: 04.04.2023
(51) Int. Cl.: B32B 27/18, B32B 5/18, B32B 5/24, B32B 7/02, B32B 7/06, B32B 27/30, B32B 27/40

(54) **KLIMAAKTIVE GESCHÄUMTE FOLIE UND DARAUS ERHÄLTLICHE VERBUNDGEBILDE**

(30) Priorität: 29.04.2022 DE 102022204253
(71) Anmelder: Benecke-Kaliko AG, 30419 Hannover (DE)
(72) Erfinder: Dr. Gerken, Andreas, 30165 Hannover (DE); Niewerth, Ralf, 30165 Hannover (DE)
(74) Vertreter: Continental Corporation

(57) **Zusammenfassung**

Die vorliegende Erfindung betrifft einen Mehrschichtverbund mit einer geschäumten Polyurethanlage und einer darüber angeordneten kompakten Polymerlage auf Basis von Polyurethan oder Polyacrylat, dadurch gekennzeichnet, dass die geschäumte Polyurethanlage und die kompakte Polymerlage ein Tensid oder Tensidgemisch enthalten und die Tensidmenge in der kompakten Schichtlage 40 bis 130 Gew.-% der Tensid- oder Tensidgemischmenge in der geschäumten Schicht beträgt. Dieser Mehrschichtverbund zeichnet sich im Vergleich zu entsprechenden Verbunden, die in der kompakten Polymerlage kein Tensid oder Tensidgemisch enthalten, durch eine signifikant verbesserte Wasserdampf- und Luftdurchlässigkeit aus, was ein angenehmeres Klimaempfinden und verbesserten Sitzkomfort begünstigt, wenn der Mehrschichtverbund als Sitzbezugsauflage verwendet wird. Die vorliegende Erfindung betrifft weiterhin Verfahren zur Herstellung solcher Mehrschichtverbunde, und die Verwendung von Tensiden oder Tensidgemischen in kompakten Polymerdecklage von Mehrschichtverbunden zur Verbesserung der Luft- und Wasserdampfdurchlässigkeit des Mehrschichtverbunds.

## Beschreibung

Die vorliegende Erfindung betrifft einen Mehrschichtverbund mit einer geschäumten Polyurethanlage und einer darüber angeordneten kompakten Polymerlage auf Basis von Polyurethan oder Polyacrylat, dadurch gekennzeichnet, dass die geschäumte Polyurethanlage und die kompakte Polymerlagelage ein Tensid oder Tensidgemisch enthalten und die Tensidmenge in der kompakten Schichtlage 40 bis 130 Gew.-% der Tensid- oder Tensidgemischmenge in der geschäumten Schicht beträgt. Die vorliegende Erfindung betrifft weiterhin Verfahren zur Herstellung solcher Mehrschichtverbunde, und die Verwendung von Tensiden oder Tensidgemischen in kompakten Polymerdecklagen von Mehrschichtverbunden mit einer zusätzlichen geschäumten Polyurethanlage zur Verbesserung der Luft- und Wasserdampfdurchlässigkeit des Mehrschichtverbunds.

### Stand der Technik

Als Sitzpolstermaterialien werden häufig Textilen, Anilinleder und Mikrofaserkunstleder wie beispielsweise Alcantara^{®} eingesetzt, die aufgrund einer guten Durchlässigkeit gegenüber Schweiß oder Wasserdampf ein gutes Silzkomfortgefühl bieten. Diese können bei Verschmutzung jedoch nur sehr schlecht gereinigt werden und sind gegenüber Abriebbelastungen, wie sie gewöhnlich bei einem Sitz oder Sitzmöbel auftreten, nur wenig widerstandsfähig, d.h. die sichtbare Oberfläche verändert sich häufig schon nach kurzem Gebrauch in negativer Weise (Verfärbungen, Aufglänzen, Verschmutzungen treten auf). Zudem können Flüssigkeiten ungehindert in diese Materialien eindringen.

Um eine widerstandsfähige, leicht reinigbare Sitzmaterialoberfläche bereitzustellen, werden in der Regel oberflächenstrukturierte (genarbte) mit Kunststoffen beschichtete Leder, Lederimitate oder Kunstleder eingesetzt. Letztere sind in der Regel flächige Textilen, die mit mindestens einer flächigen Kunststofflage verbunden sind. Diese Materialien sind gegenüber Flüssigkeiten undurchlässig aber nachteiligerweise auch gegenüber Wasserdampf und Schweiß.

Um eine Wasserdampfdurchlässigkeit in Ledern und Lederimitaten zu erreichen werden unterschiedliche Ansätze verfolgt. So ist es für Einsätze in Fahrzeugen beispielsweise üblich, eine sichtbare Perforation mit Löchern in der Größe von ca. 0,5 - 2 mm einzustanzen, durch die über versteckte Ventilatoren Feuchtigkeit abgeführt und ein Luftstrom durch die Folie geführt werden kann. Nachteilig an dieser Vorgehensweise ist eine vergleichsweise aufwändige Sitzkonstruktion durch die Ventilatoren, der Stromverbrauch der Ventilatoren und die Störung des harmonischen Oberflächendesigns durch die sichtbaren Löcher. Zudem können Flüssigkeiten und schwer entfernbare Schmutzpartikel in die Löcher eindringen.

Weiterhin ist es möglich, eine sogenannte Mikroperforation zu verwenden, bei denen mit optional beheizten Nadelwalzen oder Stanzwerkzeugen sehr kleine Perforationslöcher erzeugt werden, die mit bloßem Auge nicht sichtbar sind. Solche Konstruktionen können eine deutlich erhöhte Wasserdampf- und Luftdurchlässigkeit bei gleichzeitiger Undurchlässigkeit für Flüssigkeiten bewirken. Nachteilig ist, dass bei Verwendung von polymeren Materialien wie beispielsweise PVC insbesondere während einer Wärmebelastung oberhalb von Raumtemperatur (23°C) ein Fließen der Polymere auftritt, wodurch sich die durch die Mikroperforation erzeugten Kanäle zumindest teilweise verschließen, was zu einer Reduktion oder sogar zum Verschwinden des Effekts der erhöhten Atmungsaktivität führt.

Zudem werden häufig einzelne Fäden des Trägertextils durch die Perforationsnadeln in die erzeugten Löcher gezogen und sind auf der Oberfläche als "Fehler" sichtbar. Ein weiterer Nachteil besteht darin, dass trotz der Mikroperforation einzelne Löcher sichtbar sein können, was insbesondere bei sehr hohen Anforderungen an das optische Erscheinungsbild der Oberfläche wie bei automobilen Anwendungen kritisch ist.

Bei weiteren Verfahren zur Erzeugung einer erhöhten Wassendampfdurchlässigkeit wird versucht, gezielt Blasen in die Beschichtung einzubringen, beispielsweise durch den Zusatz niedrigsiedender Lösungsmittel, die bei der Folienherstellung schnell verdampfen und so Blasen erzeugen, durch die Wasserdampf transportiert werden kann (sh. z.B. EP 2236662 A1) oder durch das schnelle Verdampfen von Wasser beim Aufsprühen einer wässrigen Polymerdispersion auf einen erhitzten Hilfsträger in einem Umkehrbeschichtungsverfahren (US 8,486,209 B2). Bei beiden Ansätzen werden jedoch in einer so großen Anzahl unkontrolliert Blasen erzeugt, dass das resultierende Material zwar eine erhöhte Atmungsaktivität aufweist, jedoch gegenüber einem Dauergebrauch in automobilen Anwendungen nur unzureichend abriebstabil ist.

In den Anmeldungen WO 2018/059758 A1, WO 2018/059757 A1 und WO 2018/059789A1 werden atmungsaktive Konstruktionen beschrieben, die insbesondere als automobile Sitzkunstleder verwendet werden können. Diese Konstruktionen besitzen aber erfindungsgemäß in der obersten sichtbaren Deckschicht insbesondere in Narbtälern Dünnstellen mit einer Dicke von weniger als 10 µm. Unter Spannungen wie sie beim Verarbeiten von Kunstledern oder auch im Verbau auf einem Sitz auftreten, dehnen sich diese Stellen besonders stark, so dass diese weißlicher als die Umgebung erscheinen oder sogar die darunterliegende Schicht durch das starke Aufziehen durchscheint.

Aus der DE 10 2014 110 813 A1 sind atmungsaktive Konstruktionen bekannt, die eine Porosität der Konstruktion erreichen, indem zur Kunstlederherstellung eine PVC-Masse mit Fremdstoffen als Pulver versehen wird. Allerdings sind oberflächlich Poren erkennbar und die Verwendung von Weichmacher-haltigen PVC-Rezepturen im Sitzbereich ist häufig nicht erwünscht. Auch die DE 10 2019 214 338 A1 bezieht sich nur auf PVC-haltige atmungsaktive Konstruktionen.

In der DE 10 2017 109 453 A1 werden atmungsaktive Polyurethankonstruktionen beschrieben, die jedoch in der Oberfläche eine undefinierbare Porenstruktur besitzen und in der die Gefahr besteht, dass die in der Deckschicht verwendeten Seifen in Verbindung mit dem beschriebenen Isocyanat-Präpolymer einen schmierigen Oberflächenfilm bilden.

Vor dem Hintergrund dieser Offenbarungen besteht ein Bedarf für ein atmungsaktives und möglichst Luft- und Wasserdampf-durchlässiges Oberflächenmaterial, das andererseits gegenüber auf die Oberfläche aufgebrachtem Wasser und Verschmutzungen widerstandfähig und abriebbeständig ist. Möglichst soll dieses Material keine Weichmacher oder flüchtige Lösungsmittel und auch keine Löcher, Poren oder Dünnstellen (mit einer Dicke von < 10 µm) enthalten, und mit einer Oberflächenprägung oder "Narbung" versehen werden können.

Die vorliegende Erfindung befasst sich mit diesem Bedarf.

### Beschreibung der Erfindung

In den dieser Erfindung zugrundeliegenden Untersuchungen wurde überraschend gefunden, dass sich gute Wasserdampfdurchlässigkeitseigenschaften und eine gute Luftdurchlässigkeit durch einen Mehrschichtverbund realisieren lässt, der eine geschäumten Polyurethanlage und eine darüber angeordnete kompakte Polymerlage auf Basis von Polyurethan oder Polyacrylat aufweist. In diesem Mehrschichtverbund enthalten beide Schichten ein Tensid oder Tensidgemischs, wobei die Menge des Tensids oder Tensidgemischs in den Lagen speziell aufeinander abgestimmt sind. Die so hergestellten Mehrschichtverbunde weisen auch günstige Abriebstabilitäten auf.

Demzufolge betrifft die vorliegende Erfindung in einem ersten Aspekt einen Mehrschichtverbund (oder auch "mehrschichtige Folie") mit einer geschäumten Polyurethanlage und einer darüber angeordneten kompakten Polymerlage auf Basis von Polyurethan oder Polyacrylat, wobei die geschäumte Polyurethanlage und die kompakte Polymerlagelage ein Tensid oder Tensidgemisch enthalten und die Tensidmenge oder Tensidgemischmenge in der kompakten Polymerlage 40 bis 130 Gew.-% der Tensid- oder Tensidgemischmenge in der geschäumten Polyurethanlage beträgt.

Es wird angenommen, dass es durch den Tensidgehalt in der kompakten Polymerlage während des Trocknens zu einer selbsttätigen Ausbildung von Mikroporen kommt. Während der Trocknung und des Ausgelierens der pastösen Masse bilden sich dabei an den jeweiligen Phasen- bzw. Korngrenzen dieser inkompatiblen Fraktionen (Polymer/Wasser) zusammenhängende Öffnungen bzw. Kanäle aus, die durchgängig von der einen bis zur anderen Oberfläche der Polymerschicht verlaufen. Durch die Tensidmenge und die Verfahrensführung sind diese Poren in ihrer Größe beeinflussbar. Im Gegensatz z.B. zur Lehre der DE 10 2017 109 453 A1 muss dabei die Deckschicht nicht mit einem High-Solid Polyurethan mit einem Feststoffgehalt von mindestens 80 Gew.-% gebildet werden (die eher als "Suspension" mit größerer Suspensionspartikelgröße vorliegt), so dass für die Bildung der Deckschicht auf konventionelle Dispersionen, z.B. mit einem Wassergehalt von 30 bis 70 Gew.-% zurückgegriffen werden kann.

Durch die Verwendung von Polyurethan oder Polyacrylat wird der Oberfläche des Mehrschichtverbundes eine gute Abriebbeständigkeit vermittelt. Durch die geschäumte Polyurethanlage wird der Mehrschichtverbund zu einen stabilisiert, und zum anderen wird durch die Kombination der kompakten Polymerlage und der geschäumten Polyurethanlage eine insgesamt sehr hohe Wasserdampf- und Luftdurchlässigkeit realisiert.

Das Tensid oder Tensidgemisch, dass in der kompakten Polymerlage und in der geschäumten Polyurethanlage enthalten ist, ist in der Regel ein Tensid oder Tensidgemsich, dass prinzipiell zu Stabilisierung von mechanisch aufgeschlagenen Schäumen geeignet ist, und kann aus der Gruppe bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen ausgewählt sein. Besonders geeignete schaumstabilsierenden Tenside sind z.B. unter dem Namen Stokal von Bozetto (z.B. in Form von Ammoniumstearat (kommerziell z.B. erhältlich als Stokal^{®} STA), Succinamat (kommerziell z.B. erhältlich als Stokal^{®} SR) oder das Natriumsalz von Fettsäurealkylpolyglycolethersulfaten (kommerziell z.B. erhältlich als Stokal^{®} SAF new)) oder Ortegol von Evonik erhältlich. Ganz besonders bevorzugt enthält das Tensidgemisch ein nichtionisches Tensid wie Ortegol und ganz besonders bevorzugt ist das Tensidgemisch aus nicht-ionischen Tensiden gebildet.

Wie erwähnt ist die Tensid- oder Tensidgemischmenge in der kompakten Polymerschicht und der darunter angeordneten geschäumten Polyurethanlage aufeinander abzustimmen, damit der gewünschte Effekt einer guten Wasserdampf- und Luftdurchlässigkeit erreicht wird. Besonders günstige Ergebnisse in dieser Hinsicht können dann erreicht werden, wenn die kompakte Polymerlage auf Basis von Polyurethan oder Polyacrylat das Tensid oder Tensidgemisch in einer Menge enthält, die 50 bis 100 Gew.-% und insbesondere 55 bis 95 Gew.-% der Menge des Tensids oder Tensidgemischs in der geschäumten Polyurethanlage entspricht. Demnach werden sehr hohe Wasserdampf- und Luftdurchlässigkeiten erreicht, wenn in der geschäumten Polyurethanlage ein höherer Anteil an Tensid oder Tensidgemisch vorliegt als in der kompakten Polymerlage.

Der Tensidgehalt in der kompakten Polymerlage kann in relativ weiten Grenzen variiert werden, solange die Menge die vorstehenden Vorgaben in Bezug auf den Tensidgehalt in der geschäumten Polyurethanlage erfüllt. Als möglicher Bereich für den Tensidgehalt kann dabei ein Bereich von 0,1 bis 40 Gew.-%, bezogen auf das Gesamtgewicht der kompakten Polymerlage, angegeben werden. Als bevorzugt kann dabei eine Menge des Tensids oder Tensidgemisch von 5 bis 14 Gew.-% und weiter bevorzugt 6 bis 10 Gew.-% angegeben werden.

Der Tensidgehalt in der geschäumten Polyurethanlage kann ebenfalls in relativ weiten Grenzen variiert werden, mit der Maßgabe, dass das vorstehend beschriebene Verhältnis erfüllt wird. Insbesondere kann der Tensidgehalt in einem Bereich von 0,1 bis 40 Gew.-%, bezogen auf das Gesamtgewicht der geschäumten Polyurethanlage eingestellt werden, wobei Mengen von Tensid oder Tensidgemisch in der geschäumten Polyurethanlage von 6 bis 18 Gew.-% als bevorzugt und Mengen im Bereich von 8 bis 14 Gew.-% als besonders bevorzugt angegeben werden können.

Im Kontext der hier beschriebenen Erfindung ist es für die geschäumte Polyurethanlage bevorzugt, wenn sie aus einer mechanisch aufgeschäumten Polyurethandispersion erhältlich ist und erzeugt wird. Bevorzugt weist die geschäumte Polyurethanlage einen Gasanteil im Bereich von 10 bis 65 Vol.-% und bevorzugt 25 bis 55 Vol.-% auf, mit dem günstige Wasserdampf- und Luftdurchlässigkeiten realisiert werden können. Das Gas ist zweckmäßig Luft, kann aber auch ein Inertgas wie Stickstoff, Argon oder Kohlendioxid sein. Aus der mechanisch aufgeschäumten Polyurethandispersion wird in Folge des Trocknens und Verfestigens ein offenzelliger Polyurethanschaum gebildet.

Das Polymer in der kompakten Polymerlage ist entweder ein Polymer auf Basis von Polyurethan oder ein Polymer auf Basis von Polyacrylat. Polyurethane bezeichnen dabei Polymere, die in der Regel aus Polyisocyanaten und Polyolen gebildet werden, und zwischen den das Polymer bildenden Einheiten Urethangruppen (-NH-CO-O-) aufweisen. Zusätzlich können Polyurethane in der hier beschriebenen Erfindung auch Harnstoffgruppen (-NH-CO-NH-) enthalten, die sich aus der Hydrolyse von Isocyanatgruppen und die anschließende Reaktion der gebildeten Amine mit Isocyanaten ergeben können. Darüber hinaus kann das Urethan weitere funktionelle Gruppen, wie insbesondere Ether-, Ester- oder Carbonatgruppen enthalten, die in Form von Polyetherpolyolen oder Polyesterpolyolen in einem Polyolvorläufer der Polyurethane enthalten sind, sowie Thiourethangruppen, die aus einer Umsetzung von Thiolen mit Isocyanaten resultieren können. Das Polyurethan wird in der Regel aus Polyurethanvorläufern gebildet, wobei es sich um Polyisocyanate und Polyole, aber auch Isocyanatpräpolymere, die durch Umsetzung von Polyolen mit einem Überschuss an Polyisocyanat erhalten werden, handelt. Oft werden solche Isocyanatpräpolymere mit einem Überschuss von Isocyanatgruppen (NCO) zu OH Gruppen von 2:1 oder mehr gebildet, so dass diese Isocyanatpräpolymere im Mittel aus einer Polyoleinheit und zwei Polyisocyanateinheiten gebildet sind; bei höheren NCO/OH-Verhältnissen liegt zusätzlich freies Polyisocyanat vor.

Aus verarbeitungstechnischer Sicht ist es weiterhin bevorzugt, wenn das Polyurethan in der kompakten Polymerschicht wenige Verzweigungen aufweist. Bevorzugt ist das Polyurethan linear, d.h. die Polyole und Polyisocyanate, aus denen das Polyurethan oder die Polyurethanvorläufer gebildet sind, sind jeweils (in Bezug auf OH und NCO) difunktionell. Dabei kann wie erwähnt ein geringer Anteil an tri- oder polyfunktionellen Polyolen und Polyisocyanaten (z.B. bis zu jeweils 5 Gew.-% und bevorzugt bis zu jeweils 2 Gew.-%) toleriert werden, ohne dass sich dies in relevant schädlichem Ausmaß auf die Verarbeitbarkeit auswirkt, insbesondere, wenn der Anteil der tri- oder polyfunktionellen Polyolen und Polyisocyanaten durch höhere Molekulargewichte der Polyole kompensiert wird (z.B. 1 Trifunktionalität auf ein Molekulargewicht von mindestens 2000 g/mol und bevorzugt mindestens 3000 g/mol).

Bevorzugte Polyisocyanate, aus denen das Polyurethan in der erfindungsgemäßen fließfähigen Formulierung gebildet ist, umfassen aliphatische Polyisocyanate wie Isophorondiisocyanat, Hexamethylendiisocyanat, Dicyclohexylmethan-4,4'-diisocyanat, Hexandiisocyanat und Bis(isocyanatomethyl)-cyclohexan.

Geeignete Polyole, aus denen das Polyurethan in der erfindungsgemäßen fließfähigen Formulierung gebildet sein kann, sind bifunktionelle Polyole und insbesondere bifunktionelle aliphatische Polyole wie Polyetherglykol (z.B. Polyethylenglycol, Polypropylenglycol oder Polytetrahydrofurandiol), Polyesterglykol (z.B. auf Basis von Adipinsäure und α,ω-aliphatischen Diolen mit 1 bis 8 und bevorzugt 4 bis 6 CH₂-Einheiten), Polythioetherpolyol, Polycarbonatpolyol (z.B. auf Basis von 1,6-Hexandiol), ein hydroxylgruppenhaltiges aliphatisches Polyacetat und/oder ein hydroxygruppenhaltiges aliphatisches Polycarbonat. In einer bevorzugten Ausführungsform enthält das Polyurethan ein Polyetherdiol und/oder ein Polyesterdiol. Ganz besonders bevorzugt enthält das Polyurethan Polyethereinheiten, die bevorzugt aus Polyetherpolyolen oder mit Polyethern verlängerten Polyestern resultieren können. Diese Polyole weisen vorzugsweise ein Molekulargewicht Mw von 200 bis 12000, insbesondere von 500 bis 2000 auf, wobei das Molekulargewichtmittel GPC unter Verwendung geeigneter Standards (wie insbesondere Polystyrol) zu bestimmen ist. Zusätzlich können kurzkettige Kettenverlängerer wie insbesondere α,ω-aliphatische Diole mit 1 bis 8 und bevorzugt 4 bis 6 CH₂-Einheiten, α,ω-aliphatischen Diamine mit 1 bis 8 und bevorzugt 4 bis 6 CH₂-Einheiten oder andere organische Verbindungen mit zwei oder mehr reaktiven Gruppen, die als OH-Gruppen, SH-Gruppen, NH-Gruppen, NH₂-Gruppen oder CH-aciden Gruppen, beispielsweise in β -Diketoverbindungen, als Kettenverlängere eingesetzt werden, wobei diese bevorzugt ein Molekulargewicht von weniger als 500 g/mol und insbesondere ein Molekulargewicht von weniger als 300 g/mol aufweisen sollten.

In einer ganz besonders bevorzugten Ausführungsform ist das Polymer in der kompakten Polymerlage zumindest anteilsmäßig ein aliphatisches Polyurethan und ganz besonders bevorzugt ein aliphatisches Polyurethan mit Polycarbonatsegmenten und gegebenenfalls zusätzlichen Polyethersegmenten.

Alternativ oder zusätzlich dazu ist es bevorzugt, wenn die kompakte Polymerlage ein aliphatisches Polycarbonat-Polyurethan mit einem Anteil von mindestens 50 Gew.-% und weiter bevorzugt mit einem Anteil von mindestens 70 Gew.-% der Gesamtmenge an Polymer in der Polymerlage enthält. Ganz besonders bevorzugt enthält die kompakte Polymerlage nur aliphatisches Polyurethan als Polymer.

Für die Herstellung von kompakten Polymerschichten als obere Lage des erfindungsgemäßen Mehrschichtverbundes geeignete Acrylatpolymere sind z.B. die von Alberdingk unter der Bezeichnung Alberdingk AC vertrieben Acrylat-Copolymer Dispersionen oder die von Worlee unter der Bezeichnung Plextol^{®} R vertriebenen Produkte. Weitere Acrylatpolymere, die verwendet werden können sind beispielsweise in der EP 3 929 231 A1 (z.B. in [0040]), oder EP 3 623 400 A1 (z.B. in [0037]) beschrieben.

Als Polyurethan in der geschäumten Polyurethanlage kann ein Polyurethan verwendet werden, wie es vorstehend für die kompakte Polymerschicht beschrieben wurde, wobei auch es auch in diesem Fall bevorzugt ist, wenn die geschäumte Polyurethanlage zumindest anteilsmäßig ein aliphatisches Polyurethan und ganz besonders bevorzugt ein aliphatisches Polyurethan mit Polycarbonatsegmenten und gegebenenfalls zusätzlichen Polyethersegmenten enthält.

Neben dem Polymer bzw. Polyurethan kann die kompakte und die geschäumte Lage des Mehrschichtverbunds weitere Additive zur Eigenschaftsteuerung enthalten. Beispielsweise kann es wünschenswert sein, wenn das Polyurethan infolge der Bildung einer Polyurethanschicht partiell vernetzt wird. Zu diesem Zweck kann die fließfähige Formulierung zusätzlich geeignete Vernetzer, z.B. auf Basis von Isocyanaten, Carbodiimiden und/oder Epoxiden enthalten, aber es können auch andere Vernetzer wie Aceridine, Melamine und Peroxide zum Einsatz kommen. Als geeigneter Anteil für solche Vernetzer kann eine Menge im Bereich von bis zu 5 Gew.-% bezogen auf die Trockenmasse der kompakten Polymerlage und der geschäumten Polyurethanlage angegeben werden, wobei typischerweise der Anteil in einem Bereich von 0,2 bis 4 Gew.-% und bevorzugt etwa 1 bis 3 Gew.-% eingestellt wird.

Neben Vernetzungsmitteln können übliche Additive in die kompakte Polymerlage und/oder die geschäumte Polyurethanlage einbezogen werden und darin enthalten sein, die (ohne Beschränkung) ausgewählt sind aus Füllstoffen, insbesondere mineralischen und/oder biobasierten Füllstoffen, Flammschutzmitteln und/oder Flammschutzsystemen, Verdickern, Rheologiehilfsmitteln, Tensiden, pH-regulierenden Mitteln, Entlüftungsmitteln, Verlaufshilfsmittel, Alterungsschutzmitteln, Pigmenten und Schaumstabilisierungsmitteln. Dabei ist es bevorzugt, wenn Flammschutzmittel in der geschäumten Polyurethanlage, und gegebenenfalls nicht in der kompakten Polymerlage enthalten sind. In einer Ausführungsform enthält die kompakten Polymerlage keine Flammschutzmittel.

Ein geeigneter Verdicker ist beispielsweise ein Verdicker auf Basis von Acrylat-Copolymeren. Ein geeigneter Entschäumer ist z.B. ein auf Silikon basierter Entschäumer. Geeignete Flammschutzmittel sind insbesondere ausgewählt aus der Gruppe umfassend organische Phosphorverbindungen wie organisches Phosphinat, Arylphosphatester oder phosphorhaltiges Polyol, Ammoniumphospat oder -polyphosphat, Melamincyanurat, Melaminphosphat, Melamin, Melaminpolyphosphat, roter Phosphor, Aluminiumdiethylphosphinat, Aluminiumtrihydroxid, Magnesiumhydroxid, Zinkstannat, expandierbarer Graphit, und Zinkborat.

Bei Additiven wie Verdickern, Rheologiehilfsmitteln, Tensiden, pH-regulierenden Mitteln, Entlüftungsmitteln, Verlaufshilfsmitteln, Alterungsschutzmitteln, Pigmenten und Schaumstabilisierungsmitteln ist es meist ausreichend, wenn diese in vergleichsweise geringen Mengen in die kompakte Polymer- und/oder die geschäumte Polyurethanlage einbezogen werden, so dass deren Gesamtgehalt in der Regel 10 Gew.-% bezogen auf das Gewicht der jeweiligen Lage nicht übersteigt.

Demgegenüber können Füllstoffe und insbesondere Flammschutzmittel auch in größeren Mengen in die kompakte Polymer- und/oder die geschäumte Polyurethanlage einbezogen werden. Enthält die kompakte Polymer- und/oder die geschäumte Polyurethanlage ein Flammschutzmittel und/oder ein Flammschutzsystem (d.h. eine Kombination von mehreren Flammschutz aktiven Substanzen), können diese einen Anteil von 15 bis 55 Gew.-% und insbesondere 20 bis 45 Gew.-% in der Lage ausmachen. Der Füllstoffgehalt kann in einem ähnlichen Bereich eingestellt werden.

Bevorzugt ist es auf der anderen Seite, wenn die kompakte Polymerlage und die geschäumte Polyurethanlage keine zugesetzten Weichmacher enthalten.

Die kompakte Polymerlage auf Basis von Polyurethan oder Polyacrylat ist vorzugsweise oberflächenstrukturiert oder genarbt, so dass sie ein gewünschtes Oberflächenaussehen aufweist. Eine Oberflächenstrukturierung ist beispielsweise eine Prägung, die regelmäßig sein kann. Eine "Narbe" ist im Kontext der hier beschrieben Erfindung eine so ausgestaltete Oberflächenstrukturierung, dass der Benutzer die Struktur mit einer Lederoberfläche assoziiert; diese kann ein Aussehen aufweisen wie ein Spaltleder oder wie die zur Haarseite (oder Außenseite, wenn keine Haare vorhanden) gerichtete, genarbte Oberfläche eines echten Leders. Wenn die kompakte Polymerlage genarbt ist, handelt es sich bei dem Mehrschichtverbund um ein "Kunstleder" oder "Lederimitat".

Die kompakte Polymerlage auf Basis von Polyurethan oder Polyacrylat weist vorzugsweise ein Flächengewicht im Bereich von 20 bis 80 g/m² und besonders bevorzugt 25 bis 60 g/m² auf. Für den erfindungsgemäßen Mehrschichtverbund ist es bevorzugt, wenn das Gesamtflächengewicht der kompakten Polymerlage auf Basis von Polyurethan oder Polyacrylat und der geschäumten Polyurethanlage im Bereich von 60 bis 150 g/m² und bevorzugt 75 bis 120 g/m² liegt.

Der Mehrschichtverbund ist, unabhängig davon ob er eine Oberflächenstrukturierung aufweist oder nicht, vorzugsweise so ausgestaltet, dass die kompakte Polymerlage auf Basis von Polyurethan oder Polyacrylat eine Mindestschichtdicke über die gesamte Fläche der Schicht von > 10 µm aufweist. Bei einer Oberflächenstrukturierung heißt dies, dass diese Mindestschichtdicke auch dann erreicht wird, wenn das Substrat, auf dem die kompakte Polymerlage Erhöhungen aufweist (z.B. als Negativ von Narbtälern), so dass eine darüber aufgebrachte Schichte an diesen Stellen dünner ist als im Mittel über die gesamte Schicht.

Der Mehrschichtverbund umfasst bevorzugt zusätzlich zu der kompakten Polymerlage und der geschäumten Polyurethanlage einen flächigen Träger, wobei es sich insbesondere um einen Textilträger oder Lederträger handelt. Als Textilträgerschicht können alle im Bereich der Kunstleder üblich verwendeten Textilien verwendet werden, insbesondere Textilien auf Basis von Polyestern. Zusätzlich kann der Mehrschichtverbund zudem weitere Lagen enthalten, wie insbesondere eine Schicht zum Kaschieren des flächigen Trägers. Eine solche Lage ist aber für den erfindungsgemäßen Mehrschichtverbund nicht erforderlich, da ein solcher flächiger Träger auch direkte an die geschäumte Polyurethanlage angebunden werden kann. Wenn ein Lederträger verwendet wird, bildet der erhaltene Mehrschichtverbund ein beschichtetes Leder.

Darüber hinaus ist es möglich, dass der erfindungsgemäße Mehrschichtverbund auf der Oberseite der kompakten Polymerschicht noch ein oder mehrere Lackschichten aufweist, bevorzugt mindestens eine Lackschicht auf Basis eines Polyurethan- oder Acrylatlacks.

Wie erwähnt vermittelt der beschriebene Aufbau des Mehrschichtverbunds eine besonders günstige Wasserdampfdurchlässigkeit und eine günstige Luftdurchlässigkeit, die dem Mehrschichtverbund "Atmungsaktivität" verleiht. In den meisten Fällen weist der erfindungsgemäße Mehrschichtverbund eine Gasdurchlässigkeit im Bereich von 1 bis 200 ldm⁻²min⁻¹ und eine Wasserdampfdurchlässigkeit im Bereich von 0,1 bis 200 mgcm⁻²h⁻¹ auf, wobei die Gasdurchlässigkeit mittels DIN EN ISO 9237-1995 und die Wasserdampfdurchlässigkeit mittels DIN EN ISO 14268.2-2013 Verfahren C zu bestimmen ist. Bevorzugt weist der erfindungsgemäße Mehrschichtverbund eine Wasserdampfdurchlässigkeit von mindestens 1,1 mgcm⁻²h⁻¹, weiter bevorzugt von mindestens 1,4 mgcm⁻²h⁻¹ und noch weiter bevorzugt im Bereich von 2 bis 11 mgcm⁻²h⁻¹ auf. Als besonders bevorzugte Gasdurchlässigkeit können für den erfindungsgemäßen Mehrschichtverbund Werte von mindestens 0,2 ldm⁻²min⁻¹, insbesondere mindestens 0,75 ldm⁻²min⁻¹ und ganz besonders bevorzugt im Bereich von 1 bis 20 ldm⁻²min⁻¹ angegeben werden.

Der erfindungsmäße Mehrschichtverbund kann im Prinzip mit jedem Verfahren hergestellt werden, mit dem Verbundgebilde aus mehreren Schichten hergestellt werden können, wobei bevorzugt die kompakte Polymerlage zuerst gebildet wird und die geschäumte Polyurethanlage auf diese Lage aufgebracht wird. Ein weiterer Aspekt der vorliegenden Erfindung betrifft daher ein Verfahren, dass die folgenden Schritte aufweist:
i) Aufbringen einer Polymerdispersion, die ein Polyurethan oder ein Polyacrylat und ein Tensid oder Tensidgemisch enthält, auf ein Substrat und Trocknen der Dispersion unter Erhalt einer ersten Polymerlage;
ii) mechanisches Aufschäumen einer Polyurethandispersion, die ein Tensid oder Tensidgemisch enthält, Aufbringen des Schaums aus der Dispersion auf die erste Polymerlage und Trocknen des Schaums unter Erhalt einer zweiten Lage aus geschäumten Polyurethan.

Im Rahmen dieses Verfahrens sind die Schritte i) und ii) so zu gestalten, dass die Menge des Tensids oder Tensidgemischs, die in der Polymerdispersion gemäß Schritt i) enthalten ist, geringer ist als die Menge des Tensids oder Tensidgemischs, die in der Polyurethandispersion zur Herstellung der zweiten Lage verwendet wird. Bevorzugt sind die Tensid- oder Tensidgemischmengen dabei so aufeinander abgestimmt sind, dass die erste Polymerlage nach dem Trocknen eine Tensid- oder Tensidgemischmenge enthält, die 40 bis 130 Gew.-% der Tensid- oder Tensidgemischmenge in der getrockneten zweiten Lage beträgt.

Die Polymerdispersion weist vorzugsweise einen Lösungsmittel- und insbesondere Wassergehalt im Bereich von 30 bis 70 Gew.-% auf.

Das Auftragen der Polymerdispersion in Schritt i) kann mittels üblicher Auftragsverfahren erfolgen, z.B. mit einem Rakelmesser oder einer Druckwalze in der Weise, dass die Oberfläche des Substrats so gut bedeckt ist, dass sich nach dem Trocknen der Masse ein Polymerfilm bildet, der trotz der durch die Struktur des Transferbandes vorgegebenen Unebenheiten keine Stellen mit einer Dicke < 10 µm aufweist. Das Substrat kann dabei eine Oberflächenstruktur aufweisen, die dem Negativ einer gewünschten Oberflächenstruktur des Mehrschichtverbundes entspricht. In einem solchen Fall spricht man auch von einem Transferbeschichtungsverfahren, weil für die spätere Verwendung das Substrat wieder von dem Mehrschichtverbund entfernt, z.B. abgezogen wird.

Das Trocknen in Schritt i) kann z.B. in einem üblichen Trockenofen erfolgen.

Das mechanische Aufschäumen kann beispielsweise mit einem handelsüblichen Mixer oder Gerät der Firmen Hansa-Mixer oder Beba-Mischtechnik erfolgen. Für das Aufbringen und Trocknen können zweckmäßig die für Schritt i) angegebenen Vorgehensweisen verwendet werden.

Das vorbeschriebene Verfahren liefert einen Mehrschichtverbund mit einer kompakten Polymerlage und einer geschäumten Polyurethanlage, das Verfahren kann aber auch ohne weiteres für die Bereitstellung weiterer Lagen angepasst werden. Z.B. kann das Verfahren um einen Schritt iii) des Anbringens eines flächigen Trägers auf der in ii) erzeugten zweiten Lage erweitert werden, wobei es sich bevorzugt um einem Textilträger oder Lederträger handelt. Ein solcher flächiger Träger kann entweder direkt auf der geschäumten Polyurethanlage oder über eine Zwischenschicht aus Kaschiermasse, die ebenfalls geschäumt sein kann, auf dieser angebracht werden. Zur Kaschierung können auch andere Verfahren wie web-Kaschierung, Pastenpunktbeschichtung, Pulver-Hotmeltkaschierung, nichtflächige Hotmeltauftragsverfahren mit Walzen oder Düsen verwendet werden, die eine nicht vollflächige Kaschierung des Textils oder Leders ermöglichen.

Weiterhin ist es möglich, das Verfahren mit einem zusätzlichen Schritt iv) des Ablösens des in i) und ii) oder des in den Schritten i) bis iii) gebildeten Mehrschichtverbundes von dem Substrat und gegebenenfalls einen Schritt v) des Aufbringens von einer oder mehreren Lackschichten auf die kompakte Polymerlage weiter auszugestalten.

Abschließend kann der gebildete Mehrschichtverbund noch mechanisch behandelt werden, z.B. durch Ziehen, Walken oder Druckbeaufschlagung, um die Offenzelligkeit des Schaumes in der geschäumten Polyurethanschicht zu verbessern und eine verbesserte Klimaaktivität und verbessertes haptisches Empfinden zu erreichen.

In den Schritten i) und ii) ist das Verhältnis der prozentualen Tensidmenge von in der Polymerdispersion und der Polyurethandispersion bevorzugt so eingestellt, dass es im Bereich von 1 : 1 bis 1 : 20 liegt. In der Polymerdispersion in Schritt i) liegt der Tensidanteil bevorzugt bei 1 bis 10 Gew.-%, in der Polyurethandispersion in Schritt ii) bevorzugt bei 2 bis 20 Gew.-%.

In einem noch weiteren Aspekt betrifft die vorliegende Erfindung einen Mehrschichtverbund, wie er aus dem im Vorstehenden Aspekt beschriebenen Verfahren erhältlich ist oder erhalten wird.

In einem noch weiteren Aspekt betrifft die vorliegende Erfindung die Verwendung eines Tensids oder Tensidgemischs in einem Mehrschichtverbund mit einer kompakten Polymerdecklage auf Basis von Polyurethan oder Polyacrylat und einer unter der kompakten Polymerdecklage positionierten Polyurethanschaumschicht zur Verbesserung der Luft- und Wasserdampfdurchlässigkeit des Mehrschichtverbundes. Bevorzugt enthält dabei die Polyurethanschaumschicht eine Menge an Tensid oder Tensidgemisch, die in einem Verhältnis von 1/0,4 bis 1/1,3 zur Tensidmenge in der Polymerdecklage steht.

Die erfindungsgemäßen Mehrschichtverbunde zeichnen sich durch eine hohe Atmungsaktivität und Wasserableitfähigkeit in Verbindung mit einer hohen Abriebstabilität aus und sind weichmacherfrei, so dass sie insbesondere in Bereichen eingesetzt werden können, die mit der bekleideten oder unbekleideten menschlichen Haut in Kontakt kommen, beispielsweise auf Sitz- oder Rückenlehnflächen. Hier können die Mehrschichtverbunde, die idealerweise als Kunstleder ausgebildet werden, zu einem im Vergleich zu standardmäßig im Sitzbereich eingesetzten Kunstledern angenehmeren Klima- und damit Sitzkomfort führen, wenn der Benutzer längere Zeit auf diesen Flächen sitzt oder diese berührt.

Entsprechend betrifft die vorliegende Erfindung in einem noch weiteren Aspekt die Verwendung eines Mehrschichtverbundes, wie er vorstehend beschrieben wurde in Architekturanwendungen, oder zur Herstellung von Kleidungsstücken, inklusive Schuhen und Funktionsbekleidung, oder Möbeln. Besonders geeignet sind die Mehrschichtverbunde für die Herstellung von Sitzverkleidungen in Automobilanwendungen. Daneben können die erfindungsgemäßen Mehrschichtverbunde auch in anderen Applikationen wie Verpackung, Isolation, Polsterung, Membranen oder in der Filtertechnik eingesetzt und verwendet werden.

Zur Unterstützung der klimatisierenden Wirkung können die erfindungsgemäßen Mehrschichtverbunde mit zusätzlichen klimatisierenden Bauelementen, wie z.B. Heizelementen oder Peltierelementen kombiniert werden. Zudem kann eine zusätzliche aktive und/oder passive Belüftungseinrichtung vorgesehen werden.

Durch den speziellen Aufbau des erfindungsgemäßen Mehrschichtverbunds werden insbesondere die folgenden Vorteile realisiert werden:
- der erfindungsgemäße Mehrschichtverbund kann mit Hilfe üblicher Verarbeitungsmethoden hergestellt werden
- es kann ein Weichmacher- und PVC-freies Verbundgebilde dargestellt werden
- es kann ein klimaaktives Verbundgebilde mit einer optisch einwandfreien Oberfläche und ohne sichtbare Poren dargestellt werden
- Eine Lochung oder Mikroperforation des Verbundgebildes für eine gute Atmungsaktivität (gemessen durch Luftdurchlässigkeit und Wasserdampfdurchlässigkeit) ist nicht erforderlich
- Das Verbundgebilde kann zur Einstellung optischer und haptischer Eigenschaften mit einer Narbung versehen werden, ohne dass die Atmungsaktivität beeinträchtigt wird
- Das Verbundgebilde kann zur Einstellung optischer, haptischer und Gebrauchseigenschaften mit einer Lackierung versehen werden, ohne dass die Atmungsaktivität verloren geht
- Das Verbundgebilde hat eine gute Beständigkeit gegenüber mechanischen Abriebbeanspruchungen wie sie beispielsweise in Sitzmöbeln vorkommen
- Das Verbundgebilde ermöglicht insbesondere bei Verwendung textiler Träger im Vergleich zu anderen Sitzmaterialien die Herstellung sehr leichter Konstruktionen

Im Folgenden wird die vorliegende Erfindung anhand einiger illustrierender Beispiele noch näher erläutert, die jedoch nicht in irgendeiner Weise als beschränkend hinsichtlich der Anwendbarkeit oder des Schutzbereichs der Anmeldung zu verstehen sind.

### Beispiele:

Als Basisdispersionen zur Herstellung der im folgenden beschriebenen Ausführungsbeispiele werden folgende Dispersionen eingesetzt:
- Impranil DLU (Fa. Covestro, Alphatische Polycarbonatester-Polyetherpolyurethan-Dispersion, ca. 60 % Festkörpergehalt)
- Impranil DL 2077 (Fa, Covestro, Anionische PolycarbonatpolyurethanDispersion, ca. 35 % Festkörpergehalt)
- Hydran WLS-250 (Fa. DIC. aliphatische Polycarbonatpolyurethandispersion, ca. 35 % Festkörpergehalt)

### Herstellung der Masse 1:

Entsprechend der Tabelle 1 werden 880 g Dispersionen bzw. Dispersionsgemisch im angegebenen Verhältnis mit 8 g Isocyanatvernetzer Desmodur DN (Covestro), 5 g Verdicker Cartabond ABL (Archroma), 5 g Verdicker BorchiGel 434 (Borchers), 50 g wässrigem Schwarz-Farbpigment mit einem Dispersionsrührer gut vermischt. Danach wird unter vorsichtigem Rühren die entsprechende aus Tabelle 1 zu entnehmende Menge Tensid Ortegol P1 (Evonik) zugegeben.

### Herstellung der Masse 2:

700 g Impranil DLU (Covestro), 80 g Flammschutzmittel auf Basis von Melaminisocyanurat, 90 g Flammschutzmittel auf Basis von Aluminiumphosphinat, 80 g Isocyanatvernetzer Desmodur N 3900 (Covestro), 2,5 g Verdicker Cartabond ABL (Archroma), 2,5 g Verdicker BorchiGel 434 (Borchers), 80 g Tensid Ortegol P1 (Evonik) und 10 g wässriges Schwarz-Farbpigment werden mit einem Dispersionsrührer gut vermischt. Anschließend wird die Masse mit einem Hansa-Schaummixer auf eine Dichte von ca. 500 g/l aufgeschäumt.

### Herstellung des Verbundgebildes:

Die Masse 1 wird mit einem Streichmesser auf einen genarbten Transferträger in einer Menge aufgetragen, dass sich nach dem Trocknen der Masse ein Polymerfilm mit einem Flächengewicht von 30 - 40 g/m² bildet. Die Masse wird dann 120 sec bei 80°C und anschließend 120 sec bei 160°C getrocknet. Auf diesen getrockneten Film wird mit einem Streichmesser die Masse 2 in einer Menge aufgetragen, dass sich ein verbundener Polymerfilm aus den Massen 1 und 2 bildet, der ein Gewicht von Insgesamt ca. 80 g/m² aufweist.

In die noch flüssige Masse 2 wird ein flächiger Textilträger (Baumwolle/Polyester-Gestrick mit 270 g/m², Fa. Reichenbach) eingelegt und im Ofen bei 120 sec 80°C und anschließend 120 sec. 150°C ausgehärtet. Das getrocknete Verbundgebilde wird dann vom genarbten Transferträger abgezogen und danach optional mit einem Polyurethanlack auf wässriger Basis versehen, so dass sich eine Trockenlackauflage des Lackes von ca. 10 g/m² ergibt. Die Eigenschaften des Verbundgebildes wurden bestimmt und mit der in Tabelle 1 aufgeführten Referenz (Polyurethan Kunstleder) verglichen.

**Tabelle 1**

| | Impranil DLU [g] | Impranil DL 2077 XP [g] | Hydran WLS•250 [g] | Ortegol P1 [g] | Lackierung |
|---|---|---|---|---|---|
| Vergleichsbeispiel 1 | 660 | 220 | - | 0 | Ja |
| Beispiel 1 | 660 | 220 | - | 40 | Ja |
| Beispiel 2 | 660 | 220 | - | 60 | Ja |
| Beispiel 3 | 660 | 220 | - | 80 | Ja |
| Beispiel 4 | 660 | 220 | - | 40 | Ja |
| Beispiel 5 | 660 | 220 | - | 40 | Nein |
| Beispiel 6 | 550 | 330 | - | 40 | Ja |
| Beispiel 7 | 550 | 330 | - | 40 | Nein |
| Beispiel 8 | 770 | 110 | - | 40 | Ja |
| Beispiel 9 | 770 | 110 | - | 40 | Nein |
| Beispiel 10 | 880 | - | - | 40 | Ja |
| Beispiel 11 | 880 | - | - | 40 | Nein |
| Beispiel 12 | - | - | 880 | 40 | Ja |
| Beispiel 13 | - | - | 880 | 40 | Nein |

**Tabelle 2**

| | Martindaleabrieb, DIN EN ISO 12947 T2.4,12 kPa | | Wasserdampfdurchläs sigkeit DIN EN ISO 14268 5.2 Verfahren C | Luftdurchlässi gkeit DIN EN ISO 9237 |
|---|---|---|---|---|
| | 60000 Touren | 80000 Touren | [mg/(cm²*h)] | [l/(dm²*min)] |
| Referenz* | i.O. | i.O. | 0,39 | 0 |
| Vergleichsbei spiel 1 | i.O. | i.O. | 1,04 | 0,16 |
| Beispiel 2 | i.O. | i.O. | 1,45 | 1,09 |
| Beispiel 3 | i.O. | i.O. | 3,82 | 7,64 |
| Beispiel 4 | i.O. | i.O. | 0,96 | 0,77 |
| Beispiel 5 | i.O. | Kuppenabr ieb | 6,71 | 7,86 |
| Beispiel 6 | i.O. | i.O. | 5,58 | 2,57 |
| Beispiel 7 | i.O. | Kuppenabr ieb | 8,11 | 9,27 |
| Beispiel 8 | i.O. | i.O. | 4,74 | 1,42 |
| Beispiel 9 | i.O. | Kuppenabr ieb | 8,80 | 4,65 |
| Beispiel 10 | i.O. | i.O. | 3,29 | 0,83 |
| Beispiel 11 | i.O. | Kuppenabr ieb | 8,77 | 4,29 |
| Beispiel 12 | i.O. | i.O. | 2,28 | 1,63 |
| Beispiel 13 | Kuppenabr ieb | | 10,06 | 17,90 |

Die Beispiele 2, 3 und 4 zeigen, dass lackierte erfindungsgemäße Produkte eine gute Abriebbeständigkeit im Martindaleabriebtest auch noch bei 80000 Touren aufweisen. In diesen Beispielen werden zudem jeweils gute Luftdurchlässigkeiten und Wasserdampfdurchlässigkeiten erreicht, die größer sind als die des Vergleichsbeispiels ohne Tensid in der obersten Schicht. In den Beispielen 2 bis 4 wurde die Tensidmenge variiert, wobei das Beispiel mit der höchsten Menge an Tensid zeigt, dass nur noch die Luftdurchlässigkeit, aber nicht die Wasserdampfdurchlässigkeit, besser ist als die des Vergleichsbeispiels.

Die lackierten Muster gemäß den Beispielen 6, 8, 10 und 12, bei denen andere Dispersionsgemische und Dispersionen eingesetzt wurden, zeigen eine gegenüber dem Vergleichsbeispiel 1 und der Referenz deutlich verbesserte Wasserdampf- und Luftdurchlässigkeit. Die Muster gemäß den Beispielen 5, 7, 9, 11 und 13 sind unlackiert und haben dadurch noch einmal eine deutlich höhere Wasserdampf- und Luftdurchlässigkeit. Allerdings wird bei diesen Mustern Im Martindaletest nur noch bei 60000 Touren, aber nicht mehr bei 80000 Touren ein i.O. (In Ordnung)-Ergebnis erreicht. Das Muster gemäß Beispiel 13 besteht die Martindaleprüfung schon bei 60000 Touren nicht mehr. Allerdings zeigen diese Muster, dass bei weniger hohen Anforderungen an die Abriebbeständigkeit der Oberfläche wesentlich höhere Klimaaktivitäten erreicht werden können, indem auf eine Lackierung verzichtet wird.

## Patentansprüche

1. Mehrschichtverbund mit einer geschäumten Polyurethanlage und einer darüber angeordneten kompakten Polymerlage auf Basis von Polyurethan oder Polyacrylat, **dadurch gekennzeichnet, dass** die geschäumte Polyurethanlage und die kompakte Polymerlage ein Tensid oder Tensidgemisch enthalten und die Tensidmenge in der kompakten Polymerlage 40 bis 130 Gew.-% der Tensid- oder Tensidgemischmenge in der geschäumten Polyurethanlage beträgt.

2. Mehrschichtverbund nach Anspruch 1, **dadurch gekennzeichnet, dass** die geschäumte Polyurethanlage aus einer mechanisch aufgeschäumten Polyurethandispersion erhältlich ist, und bevorzugt als offenzelliger Schaum ausgebildet ist.

3. Mehrschichtverbund nach Anspruch 1 oder 2, **dadurch gekennzeichnet, dass** die kompakte Polymerlage auf Basis von Polyurethan oder Polyacrylat oberflächenstrukturiert oder genarbt ist.

4. Mehrschichtverbund nach mindestens einem der Ansprüche 1 bis 3, **dadurch gekennzeichnet, dass** die kompakte Polymerlage auf Basis von Polyurethan oder Polyacrylat das Tensid oder Tensidgemisch in einer Menge enthält, die 50 bis 100 Gew.-% und bevorzugt 55 bis 95 Gew.-% der Menge des Tensids oder Tensidgemischs in der geschäumten Polyurethanlage entspricht.

5. Mehrschichtverbund nach mindestens einem der vorangehenden Ansprüche, **dadurch gekennzeichnet, dass** die kompakte Polymerlage auf Basis von Polyurethan oder Polyacrylat das Tensid oder Tensidgemisch in einer Menge von 5 bis 14 Gew.-% und bevorzugt 6 bis 10 Gew.-%, enthält.

6. Mehrschichtverbund nach mindestens einem der vorangehenden Ansprüche, **dadurch gekennzeichnet, dass** die die geschäumte Polyurethanlage das Tensid oder Tensidgemisch in einer Menge von 6 bis 18 Gew.-% und bevorzugt 8 bis 14 Gew.-% enthält.

7. Mehrschichtverbund nach mindestens einem der vorangehenden Ansprüche, **dadurch gekennzeichnet, dass** die kompakte Polymerlage auf Basis von Polyurethan oder Polyacrylat eine Mindestschichtdicke über die gesamte Fläche der Schicht von > 10 µm und bevorzugt ein Flächengewicht im Bereich von 20 bis 80 g/m², besonders bevorzugt 25 bis 60 g/m², aufweist.

8. Mehrschichtverbund nach mindestens einem der vorangehenden Ansprüche, **dadurch gekennzeichnet, dass** das Gesamtflächengewicht der kompakten Polymerlage auf Basis von Polyurethan oder Polyacrylat und der geschäumten Polyurethanlage im Bereich von 60 bis 150 g/m² und bevorzugt 75 bis 120 g/m² liegt.

9. Mehrschichtverbund nach mindestens einem der vorangehenden Ansprüche, **dadurch gekennzeichnet, dass** die kompakte Polymerlage auf Basis von Polyurethan oder Polyacrylat ein aliphatisches Polycarbonat-Polyurethan enthält, bevorzugt mit einem Anteil von mindestens 50 Gew.-% und weiter bevorzugt mit einem Anteil von mindestens 70 Gew.-% der Gesamtmenge an Polymer in der kompakten Polymerlage.

10. Mehrschichtverbund nach mindestens einem der vorangehenden Ansprüche, **dadurch gekennzeichnet, dass** die geschäumte Polyurethanlage ein aliphatisches Polyurethan und optional ein oder mehrere Additive ausgewählt aus der Gruppe umfassend Flammschutzmittel, Füllstoffe, Pigmente, Verdicker, Vernetzer, insbesondere in Form von Isocyanat-, Carbodiimid- oder Epoxy-Vernetzer, Rheologiehilfsmittel, pH-regulierende Mittel, Entlüftungsmittel, Verlaufshilfsmittel und Alterungsschutzmittel enthält.

11. Mehrschichtverbund nach mindestens einem der vorangehenden Ansprüche, **dadurch gekennzeichnet, dass** der Mehrschichtverbund weiterhin einen flächigen Träger umfasst, der bevorzugt ausgewählt ist aus einem Textilträger und Lederträger.

12. Mehrschichtverbund nach mindestens einem der vorangehenden Ansprüche, **dadurch gekennzeichnet, dass** der Mehrschichtverbund auf der kompakten Polymerlage eine Lackschicht, bevorzugt auf Basis eines Polyurethan- oder Acrylatlacks aufweist.

13. Mehrschichtverbund nach mindestens einem der vorangehenden Ansprüche, **dadurch gekennzeichnet, dass** der Mehrschichtverbund eine Wasserdampfdurchlässigkeit, bestimmt gemäß DIN EN ISO 14268.2 Verfahren C im Bereich von mindestens 1,1 mgcm⁻²h⁻¹, bevorzugt von mindestens 1,4 mgcm⁻²h⁻¹ und weiter bevorzugt im Bereich von 2 bis 11 mgcm⁻²h⁻¹ und/oder eine Gasdurchlässigkeit, bestimmt gemäß DIN EN ISO 9237 von mindestens 0,2 ldm⁻²min⁻¹, bevorzugt mindestens 0,75 ldm⁻²min⁻¹ und weiter bevorzugt im Bereich von 1 bis 20 ldm⁻²min⁻¹ aufweist.

14. Verfahren zur Herstellung eines Mehrschichtverbundes gemäß einem der Ansprüche 1 bis 13, das die Schritte
i) Aufbringen einer Polymerdispersion, die ein Polyurethan oder ein Polyacrylat und ein Tensid oder Tensidgemisch enthält, auf ein Substrat und Trocknen der Dispersion unter Erhalt einer ersten Polymerlage,
ii) Mechanisches Aufschäumen einer Polyurethandispersion, die ein Tensid oder Tensidgemisch enthält, Aufbringen des Schaums aus der Dispersion auf die erste Polymerlage und Trocknen des Schaums unter Erhalt einer zweiten Lage aus geschäumten Polyurethan,
wobei die Menge des Tensids oder Tensidgemischs, die in der Polymerdispersion gemäß Schritt i) enthalten ist geringer ist als die Menge des Tensids oder Tensidgemischs, die in der Polyurethandispersion zur Herstellung der zweiten Lage verwendet wird, wobei bevorzugt die Tensid- oder Tensidgemischmengen so aufeinander abgestimmt sind, dass die erste Polymerlage nach dem Trocknen eine Tensid oder Tensidgemischmenge enthält, die 40 bis 130 Gew.-% der Tensid- oder Tensidgemischmenge in der getrockneten zweiten Lage beträgt.

15. Verfahren nach Anspruch 14, das weiterhin einen Schritt iii) des Anbringens eines flächigen Träger auf der in ii) erzeugten zweiten Lage beinhaltet, der bevorzugt ausgewählt ist aus einem Textilträger oder Lederträger, sowie gegebenenfalls einen Schritt iv) des Ablösens des so gebildeten Mehrschichtverbundes von dem Substrat und gegebenenfalls einen Schritt v) des Aufbringens eines Lacks auf die erste Polymerlage.

16. Verwendung eines Tensids oder Tensidgemischs in einer kompakten Polymerdecklage auf Basis von Polyurethan oder Polyacrylat eines Mehrschichtverbundes, der unter der kompakten Polymerdecklage eine Polyurethanschaumschicht aufweist, zur Verbesserung der Luft- und Wasserdampfdurchlässigkeit des Mehrschichtverbundes, wobei bevorzugt die Polyurethanschaumschicht eine Menge an Tensid oder Tensidgemisch enthält, die in einem Verhältnis von 1/0,4 bis 1/1,3 zu der Tensidmenge in der Polymerdecklage steht.

17. Verwendung eines Mehrschichtverbundes gemäß mindestens einem der Ansprüche 1 bis 13 in Architekturanwendungen, oder zur Herstellung von Kleidungsstücken oder Möbeln, insbesondere Sitzverkleidungen in Automobilanwendungen.
